# FASCICULE DE BREVET EUROPEEN

(11) **EP 0 878 135 B1**
(45) Date de publication et mention de la délivrance du brevet: **13.03.2002**
(21) Numéro de dépôt: 97201469.0
(22) Date de dépôt: 15.05.1997
(51) Int. Cl.: A23L 1/226, A23L 1/227, A23L 1/221

(54) **Procédé de préparation et d'extraction d'arômes**
Verfahren zur Herstellung und Extraktion von Aromas
Process for preparing and extracting aromas

(43) Date de publication de la demande: 18.11.1998
(73) Titulaire: SOCIETE DES PRODUITS NESTLE S.A., 1800 Vevey (CH)
(72) Inventeur: Cerny, Christoph, 8400 Winterthur (CH); Heyland, Sven, 8534 Weiningen (CH)
(74) Mandataire: Wavre, Claude-Alain

(56) Documents cités:
- EP-A- 0 247 999
- EP-A- 0 486 822
- CH-A- 483 203
- DE-A- 2 357 590
- FR-A- 2 124 358
- GB-A- 1 115 610
- GB-A- 2 273 442
- US-A- 3 477 856
- US-A- 3 957 745

## Description

La présente invention a pour objet un procédé d'extraction d'arômes, ainsi que l'utilisation de ces arômes pour la fabrication de compositions alimentaires.

Il est connu d'extraire des arômes en présence de solvants polaires.

Il est notamment connu d'extraire des arômes de viande ou de poisson, en utilisant de l'eau, comme solvant polaire. A l'aide de ce type d'extraction, l'extrait d'arômes isolé contient des arômes mais également des composés non volatils qui sont importants pour le goût.

Ainsi, US 3957745 décrit un procédé de préparation d'un mélange d'arômes dans lequel une -source de soufre, c'est à dire du soufre inorganique et/ou un acide aminé, réagit avec un alpha-hydroxycarbonyl, un béta-époxycarbonyl ou un alpha-époxycarbonyl, en présence d'au moins un solvant polaire, à une température comprise entre 65-200° C et à une pression de 1 à 100 atm, de manière à produire des arômes, puis les arômes sont séparés du résidu notamment par filtration. Ces arômes sont notamment utilisés pour modifier la note aromatique ou le parfum d'un produit alimentaire.

Par ailleurs, il est connu d'utiliser du CO₂ pour extraire des épices et des herbes ou pour isoler des arômes d'huile, de graisses, de fruits ou de café, par exemple.

Ainsi, US 3477856 décrit un procédé d'isolation d'arômes volatils de jus ou d'essences de fruits, dans lequel une extraction au CO₂ liquide est effectuée sur un jus ou sur une essence de fruits, la phase contenant les arômes est séparée de la phase résiduelle de jus ou d'essence de fruits puis le CO₂ contenu dans cette phase est évaporé, de manière à isoler un extrait liquide contenant des arômes volatils de fruits.

Par ailleurs, US 4328255 décrit un procédé d'extraction d'une huile de café contenant des arômes sous forme stable, dans lequel une extraction au CO₂ supercritique est effectuée sur du café rôti à au moins 80 atm et à une température supérieure à 31,3° C.

La présente invention a pour but de proposer un procédé simple et rapide permettant d'extraire des arômes volatils. De plus, le procédé selon la présente invention a l'avantage de permettre d'obtenir des arômes très concentrés.

A cet effet, dans le procédé d'extraction d'arômes, selon la présente invention, on prépare un mélange contenant, au moins, une source de soufre, un sucre réducteur, un composé phosphate et de l'eau, on chauffe ce mélange à 50-180° C pendant 30 min à 5 h, on effectue sur ce mélange une extraction liquide à contre-courant au CO₂ à 70-350 bar, puis l'on effectue une séparation sur le CO₂ chargé d'arômes, de manière à obtenir un extrait liquide d'arômes.

Dans la suite de la description, on emploiera l'expression "composé phosphate" pour désigner du phosphate, du biphosphate ou un polyphosphate.

De plus, dans la suite de la description, on emploiera l'expression "rendement d'extraction" pour désigner le rapport de la quantité d'extrait d'arômes obtenu selon la présente invention sur la quantité de mélange de départ.

On a constaté avec surprise que le procédé selon la présente invention permettait d'extraire de façon simple et rapide des arômes volatils.

Pour ce faire, on prépare donc un mélange contenant, au moins, une source de soufre, un-sucre réducteur, un composé phosphate et de l'eau. On peut préparer un mélange contenant, au moins, 1-30% d'une source de soufre, 1-30% d'un sucre réducteur, 1-15% d'un composé phosphate et 25-55% d'eau, par exemple.

On peut préparer un mélange contenant comme source de soufre du glutathion, de la cystéine, de la thiamine et/ou du sulfure inorganique, par exemple.

On peut préparer un mélange contenant comme sucre réducteur du glucose et/ou du xylose, par exemple.

On peut préparer un mélange contenant un composé phosphate, de manière notamment à maintenir le pH du mélange à une valeur comprise entre 4,5-7,5. On utilise donc comme composé phosphate, du phosphate, du biphosphate ou un polyphosphate. De préférence, on utilise un phosphate d'ammonium.

On chauffe donc ce mélange à 50-180° C pendant 30 min à 5h, de manière à réaliser une réaction de Maillard, c'est à dire, de manière à faire réagir la fonction réductrice du sucre avec la fonction amine de la source de soufre ou d'un autre composé contenu dans le mélange. Si la source de soufre ne présente pas une fonction amine, on peut utiliser comme composé phosphate, le phosphate d'ammonium, de manière à réaliser la réaction de Maillard, par exemple. Le composé phosphate, contenu dans le mélange, joue, en plus de son pouvoir tampon, le rôle de catalyseur au cours de cette réaction. On développe ainsi les arômes du mélange. On peut effectuer cette étape sous agitation notamment dans un réacteur à double manteau, tel que celui commercialisé par la société Schmizo A.G, Luzerner Strasse 27, CH-4665 Zofingen, de manière à obtenir une réaction homogène, par exemple.

Puis, on effectue donc sur ce mélange une extraction liquide à contre-courant au CO₂ à 70-350 bar. On peut effectuer cette extraction à contre-courant dans un extracteur , notamment dans un extracteur à colonne, dans lequel l'entrée du mélange se fait par le haut de la colonne et celle du CO₂ se fait par le bas de la colonne, par exemple.

On peut notamment faire varier la note aromatique de l'extrait d'arômes selon la température à laquelle on effectue sur le mélange l'extraction liquide à contre-courant au CO₂ à 70-350 bar.

Ainsi,dans un premier mode de réalisation préféré du présent procédé, on peut effectuer sur le mélange l'extraction liquide à contre-courant au CO₂ à 20-31° C, de manière à renforcer la note aromatique soufrée de l'extrait d'arômes, par exemple. On réalise ainsi l'extraction liquide à contre-courant en présence de CO₂ liquide.

Dans un second mode de réalisation préféré du procédé, on peut effectuer sur le mélange l'extraction liquide à contre-courant au CO₂ à une température supérieure à 31° C et inférieure à 100° C, par exemple. On réalise ainsi l'extraction liquide à contre-courant en présence de CO₂ supercritique.

On peut utiliser 5-20 kg de CO₂/kg de mélange pour effectuer l'extraction liquide à contre-courant, par exemple. On peut augmenter le rendement d'extraction en augmentant la quantité de CO₂/kg de mélange, par exemple.

On récupère alors, d'une part, un résidu d'extraction et, d'autre part, le CO₂ chargé d'arômes qui sort en haut de la colonne de l'extracteur et qui est ensuite amené dans le séparateur.

On effectue alors sur ce CO₂ chargé d'arômes une séparation, de manière à obtenir un extrait liquide d'arômes. On peut effectuer cette séparation dans un séparateur, dans lequel on abaisse la température du milieu à température ambiante et la pression du milieu à une valeur inférieur à 40 bar, de manière à diminuer la solubilité des arômes dans le CO₂ et à permettre l'isolation d'un extrait liquide d'arômes, par exemple.

On peut sécher l'extrait liquide d'arômes ainsi obtenu sur un support, tel que la maltodextrine ou un amidon, de manière à obtenir l'extrait d'arômes sous forme de poudre, par exemple.

On peut notamment utiliser pour l'étape d'extraction et l'étape de séparation l'unité d'extraction SFF 5860, commercialisée par la société Separex Chimie Fine, 5, rue Jean Monod-BP 9, F-54520 Champigneulles.

On peut recomprimer le CO₂ et le réintroduire dans l'extracteur pour une nouvelle extraction, par exemple.

De plus, on peut récupérer le résidu d'extraction qui contient encore environ 20% d'arômes originaux, en plus des produits de réaction, tels que le composé phosphate et les composés colorants, qui ne sont pas volatils, par exemple. On peut mélanger ce résidu d'extraction notamment avec du sel, de la sauce soja et/ou de l'extrait de levure. On peut ensuite sécher ce mélange avec un support de séchage, tel que la maltodextrine, de manière à obtenir une poudre aromatique, par exemple.

La présente invention a également pour objet l'extrait d'arômes obtenu selon le procédé et son utilisation pour la préparation d'une composition alimentaire. En effet, l'extrait d'arômes ainsi réalisé, sous forme liquide ou sous forme séchée, peut être avantageusement utilisé pour la préparation d'une composition alimentaire, par exemple. On peut notamment l'utiliser pour la préparation de plats cuisinés, de sauces ou de bouillons, de manière à modifier leur note aromatique, par exemple.

Le procédé d'extraction d'arômes ainsi que les extraits d'arômes selon la présente invention sont décrits plus en détails à l'aide de tests analytiques ci-après. Les pourcentages sont donnés en poids, sauf indication contraire.

### Test 1: Rendement d'extraction en fonction de la quantité de CO₂, de la température et de la pression lors de l'étape d'extraction liquide à contre-courant

On prépare 5 échantillons d'extrait d'arômes, obtenus par la mise en oeuvre du procédé selon la présente invention. On fait varier les conditions de l'étape d'extraction liquide à contre-courant (la quantité de CO₂, la température et la pression), pour la préparation de ces 5 échantillons, puis l'on compare leur rendement d'extraction.

Pour ce faire, on prépare un mélange contenant 8,37% de cystéine, 8,37% de thiamine, 1,90% de xylose, 20,29% de glucose, 10,38% de di-ammonium phosphate, 2,15% d'extrait d'onions, 1,32% d'hydroxide de sodium et 47,36% d'eau.

On chauffe ce mélange à 100° C pendant 4 h, de manière à réaliser la réaction de Maillard, entre la fonction réductrice du xylose et du glucose et la fonction amine de la thiamine, de la cystéine et du di-ammonium phosphate et à développer ainsi les arômes du mélange.

Puis, on effectue donc une extraction liquide à contre-courant au CO₂ dans un extracteur à colonne, dans lequel l'entrée du mélange se fait par le haut de la colonne et celle du CO₂ se fait par le bas de la colonne.
Pour les différents essais effectués, les conditions de température et de pression ainsi que la quantité de CO₂ utilisée lors de cette extraction liquide à contre-courant au CO₂ sont indiquées dans le tableau I ci-après.

On récupère alors le CO₂ chargé d'arômes qui sort en haut de la colonne d'extraction et on le soumet à une séparation dans un séparateur, de manière à écarter le CO₂ et à isoler l'extrait liquide d'arômes. Pour ce faire, on diminue la solubilité des arômes dans le CO₂, en abaissant dans l'extracteur la température à une température égale ou inférieure à 20° C et la pression à une pression inférieure à 40 bar.

Le CO₂ écarté est recomprimé et réintroduit dans l'extracteur pour une nouvelle extraction.

On sèche l'extrait d'arômes en utilisant, comme- support de séchage, de la maltodextrine.

Pour chaque essai effectué, on calcule le rendement d'extraction en calculant le % d'extrait d'arômes isolé par rapport à la quantité de mélange de départ utilisé.

Les résultats des différents essais effectués sont mentionnés dans le tableau I ci-dessous.

**Tableau I**

| | | | rendement d'extraction (%) | | |
|---|---|---|---|---|---|
| essais | pression (bar) | température (° C) | a | b | c |
| 1 | 100 | 75 | 2,75 | 4,90 | 7,25 |
| 2 | 70 | 20 | 1,15 | 2,05 | 2,70 |
| 3 | 140 | 40 | 1,90 | 3,90 | 5,40 |
| 4 | 280 | 77 | 5,15 | 8,65 | 11,90 |
| 5 | 280 | 20 | 1,55 | 2,65 | 3,75 |
| légende: (a) 5 kg de CO₂ /kg de mélange | | | | | |
| (b) 10 kg de CO₂ /kg de mélange | | | | | |
| (c) 15 kg de CO₂ /kg de mélange | | | | | |

Les résultats de ces essais mettent en évidence le fait que le rendement d'extraction des arômes est meilleur lorsque l'on utilise une quantité plus importante de CO₂. En effet, pour les 5 essais effectués, on note une augmentation du rendement d'extraction selon que l'on ait utilisé 5, 10 ou 15 kg de CO₂/kg de mélange, lors de l'extraction liquide à contre-courant sur le mélange.
De plus, les résultats de ces essais mettent en évidence le fait que le rendement d'extraction des arômes est également meilleur, lorsque l'on réalise sur le mélange l'extraction liquide à contre-courant à température élevée. En effet, les essais 1, 3 et 4 donnent de meilleurs résultats de rendement. Pour ces essais, on a effectué sur le mélange une extraction liquide à contre-courant au CO₂ supercritique.
Les résultats de ces essais montrent également que le rendement d'extraction d'arômes est meilleur, lorsque l'on réalise sur le mélange une extraction liquide à contre-courant au CO₂ à pression élevée.
Enfin, on met en évidence le fait que la densité du CO₂ n'influe pas sur le rendement d'extraction des arômes.

Ainsi le rendement d'extraction des arômes est meilleur, lorsque l'on effectue sur le mélange l'extraction liquide à contre-courant au CO₂ à température élevée, à pression élevée et en présence d'une quantité importante de CO₂.

### Test 2: Evaluation sensorielle de l'extrait d'arômes

On effectue une évaluation sensorielle sur des échantillons contenant un extrait d'arômes, obtenu par la mise en oeuvre du procédé selon la présente invention.

Pour ce faire, on prépare 5 extraits d'arômes -selon le procédé de la présente invention. Lors de la préparation de ces 5 extrais, on effectue sur le mélange, tel que décrit dans le test 1, une extraction liquide à contre-courant en présence de 15 kg de CO₂ et dans des conditions de température et de pression diffèrentes. Les conditions de température et de pression, pour la préparation de ces 5 extraits, sont mentionnées dans le tableau II ci-après.

Puis, on réalise 5 échantillons, en mélangeant 0,2 g/l de chaque extrait, ainsi réalisé, par litre d'eau chaude, contenant, par ailleurs, 2g/l de sel et 1g/l de MSG.

Parallèlement, on prépare un échantillon témoin en ajoutant 4 g/l du mélange, tel que décrit dans le test 1, par litre d'eau chaude contenant, par ailleurs, 2 g/l de sel et 1 g/l de mono-sodium de glutamate.

Ces 5 échantillons ainsi que l'échantillon témoin sont ensuite goûtés par 5 testeurs de goût, de manière à décrire et à comparer leur note aromatique.

L'évaluation sensorielle de ces 5 échantillons ainsi que celle de l'échantillon témoin sont mentionnées dans le tableau II ci-dessous.

**Tableau II**

| échantillon | conditions d'extraction | | note aromatique |
|---|---|---|---|
| | pression (bar) | température (° C) | |
| témoin | | | viande, amer, goût de soufre |
| 1 | 100 | 75 | viande |
| 2 | 70 | 20 | viande, goût de soufre |
| 3 | 140 | 40 | viande |
| 4 | 280 | 77 | viande |
| 5 | 280 | 20 | viande, goût de soufre |

L'évaluation sensorielle permet de mettre en évidence le fait que les 5 échantillons ainsi réalisés présentent un bon goût de viande.
Par ailleurs, cette évaluation sensorielle met en évidence le fait que lorsque l'on effectue l'extraction liquide à contre-courant à basse température, c'est à dire à l'aide de CO₂ liquide, on isole un extrait d'arômes ayant une note aromatique soufrée.

### Test 3: Evaluation du rendement d'extraction à l'aide d'indicateurs d'arôme

On prépare un échantillon d'extrait d'arômes, obtenu par la mise en oeuvre du procédé selon la présente invention. Pour réaliser cet échantillon, on effectue sur le mélange de départ une extraction liquide à contre-courant au CO₂ à une pression de 280 bar, à une température de 77° C et en présence de 15 kg de CO₂.

On évalue le rendement d'extraction à l'aide d'indicateurs d'arômes. Pour ce faire, on mesure dans le mélange de départ et dans l'extrait d'arômes, la concentration de 3 indicateurs d'arômes, le 2,5-diméthyl-4-hydroxy-3(2H)-furanone, l'acide acétique et le sulfurol, ayant des propriétés chimiques semblables et une polarité semblable à celles des autres composés aromatiques relevants, contenus dans l'extrait d'arômes.

On détermine la concentration d'acide acétique par voie enzymatique, en utilisant le kit enzymatique 148261 commercialisé par la société Boehringer Manheim, CP 6343, Industrie Strasse 7, CH-Rotkreuz.

On détermine la concentration de sulfurol, qui est un produit de dégradation de la thiamine, par chromatographie en phase gazeuse.

Enfin, on détermine la concentration de 2,5-diméthyl-4-hydroxy-3(2H)-furanone, par marquage avec un isotope, le C₁₃, selon la méthode décrite par Sen et al. (Sen et al., Lebensm Wiss Technol 24: 364-369, 1991).

Les valeurs de concentration des 3 indicateurs d'arômes dans le mélange de départ et dans l'extrait d'arômes, ainsi que les rendements d'extraction de ces 3 indicateurs d'arômes sont mentionnés dans le tableau III, ci-après.

**Tableau III**

| indicateur d'arômes | contration dans le mélange de départ (mg/kg) | concentration dans l'extrait d'arômes (mg/kg) | rendement d'extraction (%) |
|---|---|---|---|
| a | 76 | 308 | 48 |
| b | 470 | 2800 | 71 |
| c | 12400 | 7300 | 70 |
| légende: (a) 2,5-diméthyl-4-hydroxy-3(2H)-furanone | | | |
| (b) acide acétique | | | |
| (c) sulfurol | | | |

Les résultats mentionnés au tableau III mettent en évidence le fait que les indicateurs d'arômes ont été effectivement extraits lors de la mise en oeuvre du procédé d'extraction selon la présente invention. Par ailleurs, on met en évidence le fait que même les arômes très polaires que l'on extrait très difficilement par distillation sont extraits lors de l'extraction selon la présente invention. En effet, le 2,5-diméthyl-4-hydroxy-3(2H)-furanone, qui est un arôme très polaire, a également été extrait. On obtient une valeur de rendement d'extraction pour cet indicateur d'arômes de 48%. On suppose donc que cet arôme a été probablement partiellement décomposé au cours du procédé d'extraction selon la présente invention.

Les exemples suivants sont présentés à titre d'illustration d'une utilisation industrielle, dans le domaine alimentaire, des extraits d'arômes selon la présente invention. Dans les exemples ci-après, les pourcentages sont donnés en poids, sauf indication contraire.

### Exemple 1

On prépare un bouillon de boeuf en utilisant un extrait d'arômes, obtenu par la mise en oeuvre du procédé selon la présente invention.

Pour ce faire, on prépare un mélange contenant 8,37% de cystéine, 8,37% de thiamine, 1,90% de xylose, 20,29% de glucose, 10,38% de di-ammonium phosphate, 2,15% d'extrait d'onions, 1,32% d'hydroxide de sodium et 47,36% d'eau.

On chauffe ce mélange à 100° C pendant 4 h, de manière à réaliser la réaction de Maillard, entre la fonction réductrice du xylose et du glucose et la fonction amine de la thiamine, de la cystéine et du di-ammonium phosphate, et à développer ainsi les arômes du mélange.

Puis, on effectue donc une extraction liquide à contre-courant au CO₂ dans un extracteur, dans lequel l'entrée du mélange se fait par le haut de la colonne d'extraction et celle du CO₂ se fait par le bas de la colonne d'extraction. On effectue cette extraction en présence de 15 kg de CO₂, à une température de 77° C et une pression de 280 bar.

On récupère alors le CO₂ chargé d'arômes qui sort en haut de la colonne d'extraction et on le soumet à une séparation dans un séparateur, de manière à écarter le CO₂ et à isoler l'extrait liquide d'arômes. Pour ce faire, on diminue la solubilité des arômes dans le CO₂, en abaissant la température à une température égale ou inférieure à 20° C et la pression à une pression inférieure à 40 bar dans l'extracteur.

L'extraction et la séparation sont effectuées dans une unité d'extraction SFF 5860, commercialisée par la société Separex Chimie Fine, F-54250 Champigneulles.

Le CO₂ écarté est recomprimé et réintroduit dans l'extracteur pour une nouvelle extraction.

On sèche l'extrait d'arômes en utilisant, comme support de séchage, de la maltodextrine.

Parallèlement on prépare une composition contenant 373 g de maltodextrine, 190 g de sel, 100 g d'extrait de levure, 90 g de dextrose, 80 g d'amidon, 65 g de graisse de boeuf, 36 g de sucre, 5 g de couleur caramel, 2,5 g d'onions, 2 g d'acide citrique, 1 g de poivre, 0,5 g d'ail, 0,5 g de thym et 0,5 g de marjolaine.

On ajoute alors dans 1 1 d'eau chaude 0,8 g de l'extrait d'arômes, 1,2 g de sel et 19 g de cette composition.

On effectue également un témoin, en mélangeant dans 1 l d'eau chaude 19 g de la composition et 1,2 g de sel.

On compare alors la note aromatique du bouillon de boeuf préparé avec l'extrait d'arômes obtenu par la mise en oeuvre du procédé selon la présente invention avec celle du bouillon témoin.

Le bouillon réalisé avec l'extrait d'arôme présente un arôme de boeuf très prononcé alors que le bouillon témoin présente un très faible arôme de viande.

### Exemple 2

On prépare un bouillon de poulet en utilisant un extrait d'arômes, obtenu par la mise en oeuvre du procédé selon la présente invention.

Pour ce faire, on prépare un extrait d'arômes en procédant de la manière telle que décrite à l'exemple 1.

On prépare parallèlement une composition contenant 378 g de maltodextrine, 190 g de sel, 100 g d'extrait de levure, 91 g de dextrose, 80 g d'amidon, 65 g de graisse de poulet, 36 g de sucre, 0,5 g de couleur caramel, 2,5 g de curcuma, 2 g d'acide citrique, 1 g de poivre, 0,5 g d'ail, 0,5 g de romarin et 0,5 g de gingembre.

On ajoute alors dans 1 l d'eau chaude 0,8 g de l'extrait d'arômes, 19 g de cette composition et 1,2 g de sel.

On prépare également un bouillon témoin à partir de 1 l d'eau chaude dans lequel on mélange 19 g de la composition et 1,2 g de sel.

Puis, l'on compare la note aromatique du bouillon de poulet préparé avec l'extrait d'arômes, obtenu par la mise en oeuvre du procédé selon la présente invention avec celle du bouillon témoin.

Le bouillon réalisé avec l'extrait d'arômes présente un arôme de poulet très prononcé alors que le bouillon témoin présente un arôme peu ressemblant à celui du poulet.

## Revendications

1. Procédé d'extraction d'arômes dans lequel:
- on prépare un mélange contenant, au moins, une source de soufre, un sucre réducteur, un composé phosphate et de l'eau,
- on chauffe ce mélange à 50-180° C pendant 30 min à 5 h,
- on effectue sur ce mélange une extraction liquide à contre-courant au CO₂ à 70-350 bar,
- puis l'on effectue une séparation sur le CO₂ chargé d'arômes, de manière à obtenir un extrait liquide d'arômes.

2. Procédé selon la revendication 1, dans lequel on prépare un mélange contenant, au moins, 1-30% d'une source de soufre, 1-30% d'un sucre réducteur, 1-15% d'un composé phosphate et 25-55% d'eau.

3. Procédé selon la revendication 1, dans lequel le mélange contient comme source de soufre du glutathion, de la cystéine, de la thiamine et/ou un sulfure inorganique.

4. Procédé selon la revendication 1, dans lequel on utilise 5-20 kg de CO₂ /kg de mélange pour effectuer l'extraction à contre-courant.

5. Procédé selon la revendication 1, dans lequel on effectue sur le mélange l'extraction liquide à contre-courant au CO₂ à 20-31° C.

6. Procédé selon la revendication 1, dans lequel on effectue sur le mélange une extraction à contre-courant au CO₂ à une température supérieure à 31° C et inférieure à 100° C.

7. Procédé selon la revendication 1, dans lequel on sèche l'extrait liquide d'arômes, de manière à obtenir un extrait d'arômes en poudre.

8. Extrait d'arômes obtenu par la mise en oeuvre du procédé selon l'une des revendications 1 à 7.

9. Utilisation d'un extrait d'arôme selon la revendication 8, pour la préparation d'une composition alimentaire.

## Patentansprüche

1. Verfahren zur Extraktion von Aromastoffen, bei dem man
- eine Mischung herstellt, die mindestens eine Schwefelquelle, reduzierenden Zucker, eine Phosphatverbindung und Wasser enthält,
- diese Mischung 30 min bis 5 h auf 50-180°C erhitzt,
- diese Mischung einer Gegenstrom-Flüssig-Extraktion mit CO₂ unter 70-350 bar unterzieht,
- und dann eine Auftrennung des mit Aromastoffen geladenen CO₂ vornimmt, so dass man einen flüssigen Aromastoffextrakt erhält.

2. Verfahren nach Anspruch 1, bei dem man eine Mischung herstellt, die mindestens 1-30% einer Schwefelquelle, 1-30% reduzierenden Zucker, 1-15% einer Phosphatverbindung und 25-55% Wasser enthält.

3. Verfahren nach Anspruch 1, bei dem die Mischung als Schwefelquelle Glutathion, Cystein, Thiamin und/oder ein anorganisches Sulfid enthält.

4. Verfahren nach Anspruch 1, bei dem man zur Durchführung der Gegenstrom-Extraktion 5-20 kg CO₂/kg Mischung verwendet.

5. Verfahren nach Anspruch 1, bei dem man die Mischung der Gegenstrom-Flüssig-Extraktion mit CO₂ bei 20-31°C unterzieht.

6. Verfahren nach Anspruch 1, bei dem man die Mischung einer Gegenstrom-Extraktion mit CO₂ bei einer Temperatur über 31°C und unter 100°C unterzieht.

7. Verfahren nach Anspruch 1, bei dem man den flüssigen Aromastoffextrakt so trocknet, dass man einen pulverförmigen Aromastoffextrakt erhält.

8. Mit dem Verfahren nach einem der Ansprüche 1 bis 7 hergestellter Aromastoffextrakt.

9. Verwendung eines Aromastoffextrakts nach Anspruch 8 für die Herstellung einer Nahrungsmittelzusammensetzung.

## Claims

1. Process for extracting flavours, wherein:
- a mixture is prepared containing at least one source of sulfur, one reducing sugar, one phosphate compound and water,
- this mixture is heated at 50-180°C for 30 min to 5 h,
- a counter-current extraction is performed on this mixture with CO₂ at 70-350 bar,
- a separation is then carried out on the CO₂ loaded with flavours so as to obtain a liquid flavours extract.

2. Process according to claim 1, wherein a mixture is prepared containing at least 1-30 % of a source of sulfur, 1-30 % of a reducing sugar, 1-15 % of a phosphate compound and 25-55 % of water.

3. Process according to claim 1, wherein the mixture contains, as a source of sulfur, glutathione, cysteine, thiamine and/or an inorganic sulfide.

4. Process according to claim 1, wherein 5-20 kg of CO₂ is used per kg of mixture to carry out the counter-current extraction.

5. Process according to claim 1, wherein the liquid counter-current extraction with CO₂ is carried out on the mixture at 20-31°C.

6. Process according to claim 1, wherein a counter-current extraction with CO₂ is carried out on the mixture at a temperature above 31°C and below 100°C.

7. Process according to claim 1, wherein the liquid flavours extract is dried so as to obtain a powdered flavours extract.

8. Flavours extract obtained by implementing the process according to one of claims 1 to 7.
